# EUROPEAN PATENT SPECIFICATION

(11) **EP 1 583 090 B1**
(45) Date of publication and mention of the grant of the patent: **20.06.2007**
(21) Application number: 04017096.1
(22) Date of filing: 20.07.2004
(51) Int. Cl.: G11B 7/24, C09B 45/00

(54) **Dyes for high density optical recording media**
Farbstoffe für optische Speichermedien mit hoher Speicherdichte
Colorant pour support d'enregistrement optique de haute densité

(30) Priority: 31.03.2004 US 812931
(43) Date of publication of application: 05.10.2005
(73) Proprietor: Gigastorage Corporation, Hsinchu, Taiwan 303 (TW)
(72) Inventor: Kang, Jen-Ho, Hsinchu, Taiwan 303 (TW)
(74) Representative: Goddar, Heinz J.

(56) References cited:
- EP-A- 1 267 338
- US-B1- 6 242 067
- PATENT ABSTRACTS OF JAPAN vol. 1996, no. 08, 30 August 1996 (1996-08-30) & JP 08 099467 A (MITSUI TOATSU CHEM INC), 16 April 1996 (1996-04-16)
- PATENT ABSTRACTS OF JAPAN vol. 1996, no. 08, 30 August 1996 (1996-08-30) & JP 08 108623 A (MITSUI TOATSU CHEM INC), 30 April 1996 (1996-04-30)
- PATENT ABSTRACTS OF JAPAN vol. 2002, no. 10, 10 October 2002 (2002-10-10) & JP 2002 166648 A (RICOH CO LTD), 11 June 2002 (2002-06-11)

## Description

The present invention relates to materials for high density optical recording media, to optical recording media comprising said materials as a recording layer, and to a process for the preparation thereof.

### BACKGROUND OF THE INVENTION

Recordable optical recording media have been developed since 1980s. Said media mainly comprise a substrate, a recording layer, a reflective layer and a protective layer. At present, the organic materials suitable for the recording layer of recordable optical recording media, such as compact disks (often referred to as CD-R) comprise cyanine dyes, phthalocyanine dyes and azo dyes and the likes. These dyes commonly have a maximal absorption at a wavelength of 650 nm to 750 nm in the visible light range. As a major function, the dyes absorb a laser beam of 780 nm and then convert it into thermal energy, such that the recording layer changes in its optical characteristics to fulfil the reflectance requirements as set forth in the specification of the compact disks (Red Book). In view thereof, organic materials having a major light absorption at a wavelength outside the wavelength range of the laser beam are needed for the recording layer of the optical recording media.

Therefore, since 1990s, in order to satisfy the trend of continuous data expansion, all the major CD manufacturers make efforts at the improvements of the recording density of the CDs. To that end, the spaces between the pits and between the tracks are decreased and, in the meantime, the laser beams for reading signal are narrowed to avoid the signal cross-talk between the tracks and to raise the discriminated ratio of track length. As a result, almost all the current developments are concentrated on the laser beams with wavelengths of 635 nm to 660 nm.

According to the current developmental trend of the optical recording media, organic materials for the recordable optical recording media used at laser beams with 650 nm preferably has a light absorption at a wavelength of from 540 nm to 600 nm.

In general, one of the common materials for recording layers in the application of optical recording media is a cyanine dye. However, owing to the poor light resistance and the storage difficulty of said cyanine dye, metal chelate compounds of azo dyes having superior light- and weather resistance are suitable for recording layer. For example, United State Patent Number 5,532,342 discloses an azo metal chelate compound formed from a sulfonylphenyl-based azo compound and a variety of metal ligands, which may be applied to optical recording media, whereby a recording layer having an absorption wavelength of from 700 nm to 730 nm may be prepared. US-B1-6,242,067 discloses azo metal complex dyes for optical recording at less than 690 nm, comprising a sulfamoyl-group.

### SUMMARY OF THE INVENTION

Therefore, the objective of the present invention is to provide metal chelate compounds of azo dyes having absorption at a shorter wavelength, which may be served as materials of a recording layer in optical recording media, particularly the recording layer of high density optical recording media.

### DETAILED DESCRIPTION OF THE INVENTION

The objective of the present invention is to provide materials for high density recording media. Specifically, the present invention is to provide metal chelate compounds of azo dyes, which are served as materials of a recording layer in optical recording media. Particularly, said compounds are served as a recording layer of optical recording media having an optical storage system at a wavelength range of from 635 nm to 660 nm.

The further objective of the present invention is to provide high density optical recording media comprising a recording layer and a reflective layer successively positioned onto a substrate in order, which is characterized in that the recording layer is formed from metal chelate compounds of azo dyes according to the present invention.

The further objective of the present invention is to provide a process for the preparation of said high density optical recording media.

According to the present invention, the organic materials for the recording layer in optical recording media are metal chelate compounds of azo dyes represented by the following formula (I), 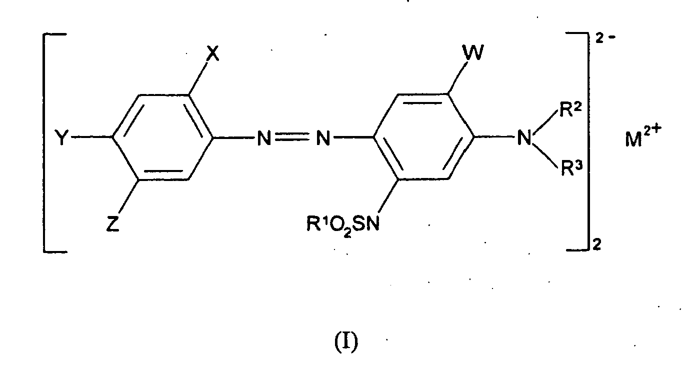 in which
R¹ represents alkyl or aryl, preferably C₁₋₆alkyl or phenyl, optionally substituted, preferably substituted with C₁₋₆alkyl. More preferably, R¹ is selected from methyl, phenyl or methylphenyl.
R² and R³, which may be identical or different, represent, independently of each other, unsubstituted or substituted alkyl, preferably unsubstituted or substituted C₁₋₆alkyl. More preferably, R² and R³ represent, independently of each other, methyl or ethyl.
W represents hydrogen, alkyl, alkoxy or halogen, preferably hydrogen, C₁₋₆alkyl, C₁₋₆alkoxy or halogen, optionally substituted. More preferably, W represents hydrogen, methyl, methoxy or chloro.
X represents hydrogen, alkyl, alkoxy or halogen, preferably hydrogen, C₁₋₆alkyl, C₁₋₆alkoxy or halogen, optionally substituted. More preferably, X represents hydrogen, methyl or methoxy.
Y represents hydrogen or an amino derivative, preferably hydrogen or benzamido (hereinafter referred to as "NBz").
Z represents hydrogen, alkyl, alkoxy or halogen, preferably hydrogen, C₁₋₆alkyl, C₁₋₆alkoxy or halogen, optionally substituted. More preferably, Z represents hydrogen, methyl or methoxy.
M represents a divalent metal selected from the elements of Group IB, IIB, or VIIIB in Periodic Table, preferably Ni, Cu or Zn.

According to the present invention, the compounds of formula (I) contain a meta diaminophenyl compound as a basic structural unit. Preferably, the basic structural unit contains meta diaminophenyl compounds with sulfamoylation on monoamino group, and a benzene ring-containing azo compound.

According to the present invention, the compounds of formula (I) for a recording layer may be prepared by synthetic methods.

According to the present invention, the high density optical recording media comprise a reflective layer and a recording layer, characterized in that the recording layer in optical recording media is formed from the compounds of formula (I).

According to the present invention, the optical recording media are prepared by a process comprising the steps as below:

A round disc-shaped polymer substrate (such as polycarbonate substrate) having an outer diameter of from 110 to 130 mm (preferably 120 mm), an inner diameter of from 10 to 20 mm (preferably 15 mm) and a thickness of from 0.3 to 1 mm (preferably 0.6 mm), is produced by an injection molding machine. In the meantime, the substrate is printed with continous spiral grooves having a depth of from 150 to 180 nm, a half-height width of from 340 to 380 nm and a bottom width of from 260 to 280 nm via a stamper.

Next, azo metal chelate compounds are dissolved in a solvent to form a 1.0 to 2.0 % (particularly 1.5 %) solution of metal chelate compounds of azo dyes. Thereafter, the dye solution is spun coated onto a substrate. To avoid over-corrosion of the plastic substrate caused by the solvents of the dye solution applied on the recording layer, the solvents used are preferably fluoroalcohols, particularly terafluoropropanol.

After coating the dye solution onto the recording layer, the absorption of the layer determined by UV-visible spectroscopy at th maximal absorption wavelength is in a range of from 0.7 to 0.8. The coated substrate is then baked at a temperature of 60 to 80□ for 10 to 20 minutes to evaporate off solvents completely.

Subsequently, the recording layer coated with dyes is then sputtered with a layer of 100 to 160 nm thickness of metal reflective layer, preferably 120-150nm, more preferably 120nm gold reflective layer. The reflective layer is then spun coated with a layer of lacquer protective gel, such as acrylics gel, followed by hardening said lacquer to form a protective layer, to which a sheet of polymer substrate, particularly a transparent substrate (preferably polycarbonate substrate) having a thickness of 0.3 to 1 mm (preferably 0.6 mm) and a diameter of 110 to 130 mm (preferably 120 mm) is attached by screen printing or spin coating, to obtain a recordable optical recording medium with a thickness of 1.00 to 1.50 mm (preferably 1.20 to 1.25 mm) and a diameter of 110 to 130 mm (preferably 120 mm).

Signals are recorded on optical recording media prepared by the aforesaid process using a commercially available recording machine (such as DVR-2000, from Pioneer Corporation), and then the properties of the recording media are determined by a commercially available tester (such as DVD-Q2000, from Aeco Ltd.).

### EXAMPLES

The present invention will be described in further detail with reference to Examples. However, the present invention is by no means restricted by the following examples. Any modifications that do not depart from the spirit of the present invention should be understood to fall within the scope of the present invention.

### Preparation of metal chelate compounds of azo dyes :

### Preparation Example : azo metal chelate compound 12

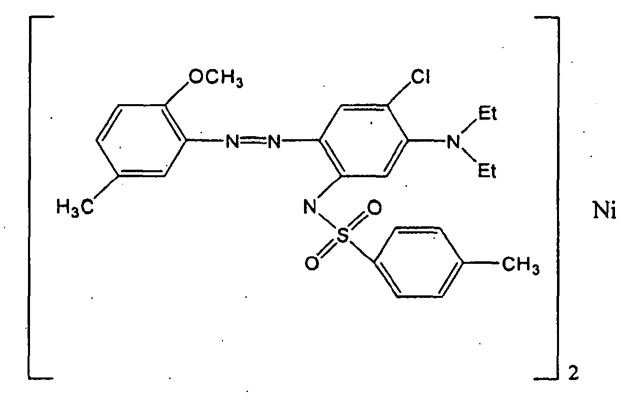

In this example, the metal chelate compound of azo dye 12 was prepared by the following steps:
1) 40 g (0.21 mole, 1.05 eq.) of tosyl chloride was charged into a dry closed system, and then cooled to 0 - 5°C in an ice water bath.
2) 39.6g (0.2 mol) of 4-chloro-N,N-diethyl-1,3-diaminobenzene was dissolved in 90 ml of toluene, followed by adding the resulting solution slowly into the solution prepared in step 1. The system was controlled to a temperature of less than 5°C with stirring for one hour, followed by standing overnight and adding 200 ml of ice water. Thereafter, the resulting product was filtrated and dried to obtain 60.8 g of Compound A. 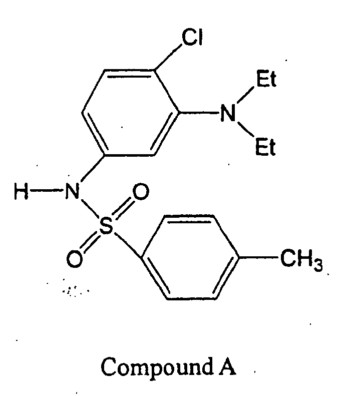
3) 52.8 g (0.15 mol) of Compound A, 9g of urea and 60 g of sodium acetate were dissolved in 600 ml of methanol, and then was transferred to ice water bath and stirred.
4) 66 ml of 37 % hydrochloric acid and 450 ml of ice water were added into 22.6 g (0.165 mol.) of 2-methoxy-5-methylaniline in ice water bath with stirring for 1 hour. 11.73 g (0.17 mol) of sodium nitrite was dissolved in 100 ml of water, followed by adding said solution slowly into the reaction mixture and stirring in ice bath for 30 minutes. Thereafter, the resulting solution was slowly added into the system of step 3. After maintaining the reaction in ice bath for 3 hours, the product stood overnight and then was filtered, washed with water and dried, to obtain 46.4 g of Compound B. 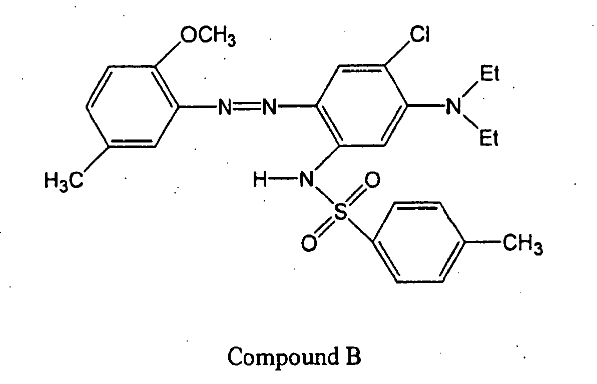
5) 25.0 g (50 mmol) of Compound B and 4.92 g (60 mmol) of sodium acetate were dissolved in 400 ml of tetrahydrofuran (THF) and 400 ml of water, followed by stirring for 10 minutes. After dissolving 6.84 g (27.5 mmol) of a tetrahydrat complex of nickel acetate Ni(CH₃COO)₂•xH₂O (x=4) in 50 ml of methanol, the reaction was carried out for 2 hours. After the completion of the reaction, 400 ml of water was added in the mixture with stirring for 1 hour and then the mixture stood overnight. Thereafter, the resulting product was filtered and the solid filtrate was washed with water and dried to obtain 13.5 g of Compound 12 as shown in Table 1 below.

Compounds 1 to 11 shown in Table 1 are prepared by similar procedures as stated in the aforesaid preparation example.

**Table 1:Dye compounds 1 to 12**

| Compound | R¹ | R² | R³ | W | X | Y | Z | M |
|---|---|---|---|---|---|---|---|---|
| 1 | CH₃ | CH₃ | CH₃ | CH₃ | H | NBz | H | Ni |
| 2 | CH₃ | CH₃ | CH₃ | OCH₃ | CH₃ | NBz | OCH₃ | Ni |
| 3 | CH₃ | C₂H₅ | C₂H₅ | H | OCH₃ | NBz | OCH₃ | Cu |
| 4 | CH₃ | C₂H₅ | C₂H₅ | Cl | OCH₃ | H | CH₃ | Zn |
| 5 | C₆H₅ | CH₃ | CH₃ | CH₃ | H | NBz | H | Ni |
| 6 | C₆H₅ | CH₃ | CH₃ | OCH₃ | CH₃ | NBz | OCH₃ | Ni |
| 7 | C₆H₅ | C₂H₅ | C₂H₅ | H | OCH₃ | NBz | OCH₃ | Ni |
| 8 | C₆H₅ | C₂H₅ | C₂H₅ | Cl | OCH₃ | H | CH₃ | Ni |
| 9 | C₆H₄CH₃ | CH₃ | CH₃ | CH₃ | H | NBz | H | Ni |
| 10 | C₆H₄CH₃ | CH₃ | CH₃ | OCH₃ | CH₃ | NBz | OCH₃ | Ni |
| 11 | C₆H₄CH₃ | C₂H₅ | C₂H₅ | H | OCH₃ | NBz | OCH₃ | Ni |
| 12 | C₆H₄CH₃ | C₂H₅ | C₂H₅ | Cl | OCH₃ | H | CH₃ | Ni |
| Note: NBz is benzamide represented by the following formula | | | | | | | | |

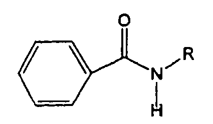

### Manufacture of the recordable optical recording media:

### Example 1

A round polycarbonate substrate having an outer diameter of 120 mm, an inner diameter of 15 mm, a thickness of 0.6 mm and continuous spiral grooves having a depth of 170 nm, a half-height width of 350 nm, a bottom width of 250 nm and a pitch of 740 nm was produced by a injection molding machine.

At a temperature of 25°C and a relative humidity of 40-50%, 1 ml of a 1.5% solution of azo metal chelate compound 1 in 2,2,3,3-tetrafluoropropanol was added dropwise to the polycarbonate substrate at its inner periphery. In the meantime, the substrate was spun at a rate of 600 rpm for 3 seconds, and then at 1000, 2000 and 5000 rpm each for 3 seconds, to obtain a recording layer uniformly covered by a dye. The thus coated substrate was then baked at 60□ for 20 minutes and a uniform and dried optical recording layer was formed.

Thereafter, 120 nm thick gold film was formed on the recording layer as a reflective layer by a sputtering machine. The reflective layer was then spun coated with about 4000 to 5000 nm of UV-curable acrylic resin (U.V lacquer). The resultant layer was cured with UV as a protective layer. The protective layer was then spun coated with a layer of adhesive, on which a transparent polycarbonate substrate having no grooves, a thickness of 0.6 mm and an outer diameter of 120 mm was attached, to obtain a recordable optical recording medium with a thickness of 1.2 mm and an outer diameter of 120 mm.

The modulation signals which meet the data format of 4.7 giga-bytes DVD were written on the optical recording media prepared above by using a commercially available recording machine DVR-2000 (from Pioneer Corporation), then the properties of the optical recording media were determined via a commercially available tester DVD-Q2000 (from Aeco Ltd.). The results are shown in Table 2.

### Example 2

Except that Compound 2 is used in place of the dye used in Example 1, all the procedures and tests of Example 1 are repeated. The results are shown in Table 2.

### Example 3

Except that Compound 3 is used in place of the dye used in Example 1, all the procedures and tests of Example 1 are repeated. The results are shown in Table 2.

### Example 4

Except that Compound 4 is used in place of the dye used in Example 1, all the procedures and tests of Example 1 are repeated. The results are shown in Table 2.

### Example 5

Except that Compound 5 is used in place of the dye used in Example 1, all the procedures and tests of Example 1 are repeated. The results are shown in Table 2.

### Example 6

Except that Compound 6 is used in place of the dye used in Example 1, all the procedures and tests of Example 1 are repeated. The results are shown in Table 2.

### Example 7

Except that Compound 7 is used in place of the dye used in Example 1, all the procedures and tests of Example 1 are repeated. The results are shown in Table 2.

### Example 8

Except that Compound 8 is used in place of the dye used in Example 1, all the procedures and tests of Example 1 are repeated. The results are shown in Table 2.

### Example 9

Except that Compound 9 is used in place of the dye used in Example 1, all the procedures and tests of Example 1 are repeated. The results are shown in Table 2.

### Example 10

Except that Compound 10 is used in place of the dye used in Example 1, all the procedures and tests of Example 1 are repeated. The results are shown in Table 2.

### Example 11

Except that Compound 11 is used in place of the dye used in Example 1, all the procedures and tests of Example 1 are repeated. The results are shown in Table 2.

### Example 12

Except that Compound 12 is used in place of the dye used in Example 1, all the procedures and tests of Example 1 are repeated. The results are shown in Table 2.

**Table 2:The dynamic test results of recording layers containing Compounds 1 to 12**

| Example | Jitter(%) Ave. | Ref(%) Ave. | I₁₄/I_{14H} Ave. | I₃/I_{14H} Ave. | PPr Ave. |
|---|---|---|---|---|---|
| 1 | 7.5 | 56 | 0.60 | 0.18 | 0.57 |
| 2 | 7.6 | 55 | 0.60 | 0.19 | 0.55 |
| 3 | 8.2 | 57 | 0.55 | 0.22 | 0.70 |
| 4 | 8.5 | 55 | 0.58 | 0.20 | 0.65 |
| 5 | 8.0 | 58 | 0.61 | 0.18 | 0.65 |
| 6 | 7.9 | 58 | 0.60 | 0.17 | 0.65 |
| 7 | 8.0 | 59 | 0.61 | 0.16 | 0.64 |
| 8 | 8.0 | 58 | 0.62 | 0.16 | 0.65 |
| 9 | 7.8 | 57 | 0.60 | 0.17 | 0.58 |
| 10 | 7.9 | 57 | 0.61 | 0.18 | 0.59 |
| 11 | 8.0 | 59 | 0.60 | 0.18 | 0.58 |
| 12 | 7.6 | 58 | , 0.62 | 0.17 | 0.58 |
| Standards of the Specification | 8% | 45-85% | >0.6 | >0.15 | 0.5-1.0 |
| Note: Jitter: jitter value; Ref: reflectance; I₃: 3T intensity; I₁₄: 14T intensity; PPr: push-pull ratio. | | | | | |

Based on the test results listed in Table 2, it can be concluded that the novel metal chelate compounds of azo dyes according to the present invention can satisfy the standards of the specification, and indeed can achieve the effects for the high density optical recording media.

The features disclosed in the foregoing description and in the claims may, both separately and in any combination thereof, be material for realising the invention in diverse forms thereof.

## Claims

1. Materials for high density optical recording media, represented by azo metal chelate compounds of formula (I): 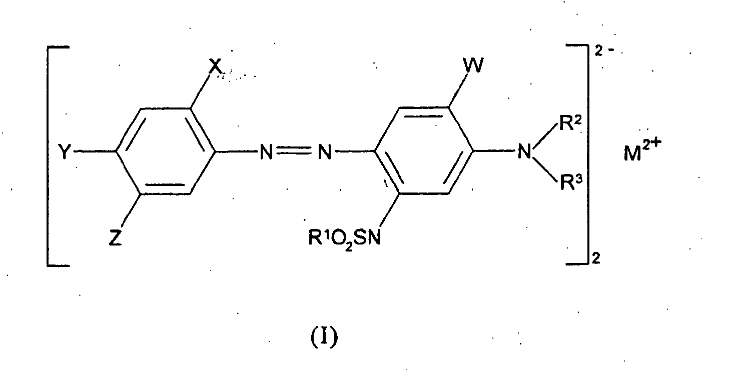 in which
R¹ represents C₁₋₆alkyl, phenyl or C₁₋₆alkyl-substituted phenyl;
R² and R³, independently of each other, represent identical or different C₁₋₆alkyl, optionally substituted by C₁₋₆alkyl;
W represents hydrogen, C₁₋₆alkyl, C₁₋₆alkoxy or halogen;
X represents hydrogen, C₁₋₆ alkyl, C₁₋₆alkoxy or halogen;
Y represents hydrogen or an amino derivative;
Z represents hydrogen, C₁₋₆alkyl, C₁₋₆alkoxy or halogen;
M represents a divalent metal selected from Group IB, IIB or VIIIB in Periodic Table.

2. Materials according to claim 1, wherein R¹ is selected from methyl, phenyl or methylphenyl; R² and R³, independently of each other, represent identical or different methyl or ethyl.

3. Materials according to claim 1, wherein W represents hydrogen, methyl, methoxy or chloro; X represents hydrogen, methyl or methoxy; Y represents hydrogen or benzamido (NBz); Z represents hydrogen, methyl or methoxy.

4. Materials according to claim 1, wherein the divalent metal M represents Ni, Cu or Zn.

5. High density recordable optical recording media, comprising a recording layer and a reflective layer formed on a substrate in order, **characterized in that** the recording layer is coated with an azo metal chelate compound of formula (I): 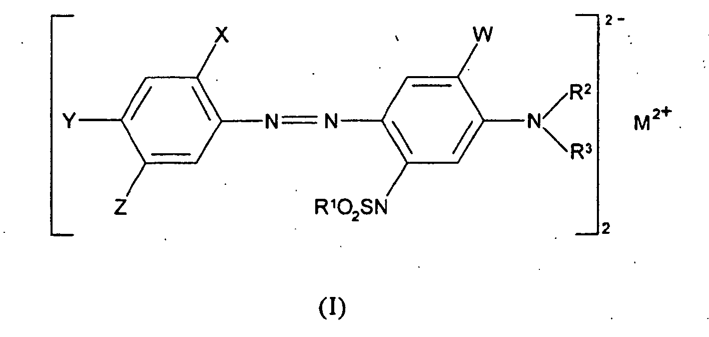 in which
R¹ represents C₁₋₆alkyl, phenyl or C₁₋₆alkyl-substituted phenyl;
R² and R³, independently of each other, represent the same or different C₁₋₆alkyl, optionally substituted by C₁₋₆alkyl;
W represents hydrogen, C₁₋₆alkyl, C₁₋₆alkoxy or halogen;
X represents hydrogen, C₁₋₆ alkyl, C₁₋₆alkoxy or halogen;
Y represents hydrogen or an amino derivative;
Z represents hydrogen, C₁₋₆alkyl, C₁₋₆alkoxy or halogen;
M represents a divalent metal selected from Group IB, IIB or VIIIB in Periodic Table.

6. High density optical recording media according to claim 5, wherein R¹ is selected from the group consisting of methyl, phenyl or methylphenyl; R² and R³, independently of each other, represent identical or different methyl or ethyl.

7. High density optical recording media according to claim 5, wherein W represents hydrogen, methyl, methoxy or chloro; X represents hydrogen, methyl or methoxy; Y represents hydrogen or benzamido (NBz); Z represents hydrogen, methyl or methoxy.

8. High density optical recording media according to claim 5; wherein the divalent metal M represents Ni, Cu or Zn.

9. A process for the preparation of high density optical recording media according any one of claims 5 to 8, comprising the steps of:
1) preparing a round polymer substrate having an outer diameter of 120 mm, an inner diameter of 15 mm, a thickness of 0.6 mm by an infection molding machine and forming continuous spiral grooves having a depth of 150 to 180 nm, a half-height width of 340 to 380 nm, a bottom width of 260 to 280 nm thereon by printing with a stamper,
2) dissolving the materials according to any one of claims 1 to 4 in solvents to form a 1.5 % solution of azo metal chelate compounds, followed by spin coating the substrate with the dye solution,
3) obtaining an absorption at the maximal absorption wavelength in a range of 0.7 to 0.8 after coating the recording layer with the dye solution, determined by UV-Visible Spectroscopy,
4) baking the coating at a temperature of 60 to 80°C for 10 to 20 minutes to evaporate off solvents,
5) forming an about 120 nm gold film as a reflective layer on the recording layer containing a dye by a sputtering machine, then spin coating said substrate with a lacquer and curing it to form a protective layer, and
6) coating the protective layer with a layer of adhesive by screen printing or spin coating, on which a transparent polymer substrate having a thickness of 0.6 mm and an outer diameter of 120 mm is attached, to obtain a recordable optical recording medium with a thickness of 1.2 to 1.25 mm and an outer diameter of 120 mm.

10. The process according to claim 9, wherein the substrate is polycarbonate.

## Patentansprüche

1. Materialien für optische Speichermedien mit hoher Speicherdichte, dargestellt durch Azometallchelatverbindungen der Formel (I): 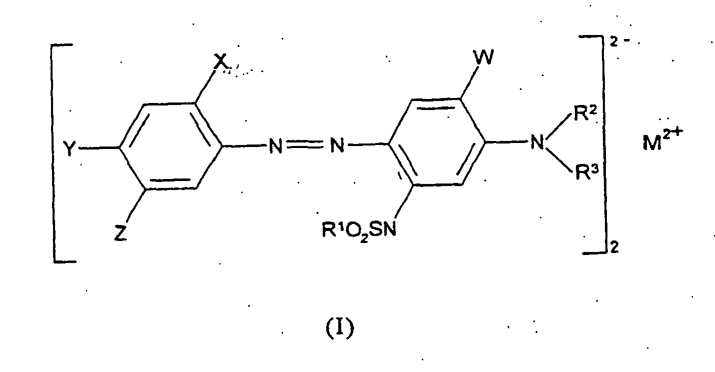 wobei
R¹ C₁₋₆-Alkyl, Phenyl oder C₁₋₆-Alkyl-substituiertes Phenyl darstellt;
R² und R³ unabhängig voneinander identisches oder unterschiedliches C₁₋₆-Alkyl, optional substituiert mit C₁₋₆-Alkyl, darstellen;
W Wasserstoff, C₁₋₆-Alkyl, C₁₋₆-Alkoxy oder Halogen darstellt;
X Wasserstoff, C₁₋₆-Alkyl, C₁₋₆-Alkoxy oder Halogen darstellt;
Y Wasserstoff oder ein Aminoderivat darstellt;
Z Wasserstoff, C₁₋₆-Alkyl, C₁₋₆Alkoxy oder Halogen darstellt;
M ein zweiwertiges Metall darstellt, das ausgewählt ist aus Gruppe IB, IIB oder VIIIB im Periodensystem.

2. Materialien nach Anspruch 1, wobei R¹ ausgewählt ist aus Methyl, Phenyl oder Methylphenyl; R² und R³ unabhängig voneinander identisch oder unterschiedlich Methyl oder Ethyl darstellen.

3. Materialien nach Anspruch 1, wobei W Wasserstoff, Methyl, Methoxy oder Chlor darstellt; X Wasserstoff, Methyl oder Methoxy darstellt; Y Wasserstoff oder Benzamido (NBz) darstellt; Z Wasserstoff, Methyl oder Methoxy darstellt.

4. Materialien nach Anspruch 1, wobei das zweiwertige Metall M Ni, Cu oder Zn darstellt.

5. Speicherfähige optische Speichermedien mit hoher Speicherdichte, umfassend eine Speicherschicht und eine Reflektionsschicht gebildet auf einem Substrat in der Reihenfolge, **dadurch gekennzeichnet, daß** die Speicherschicht mit einer Azometallchelatverbindung der Formel (I) beschichtet ist: 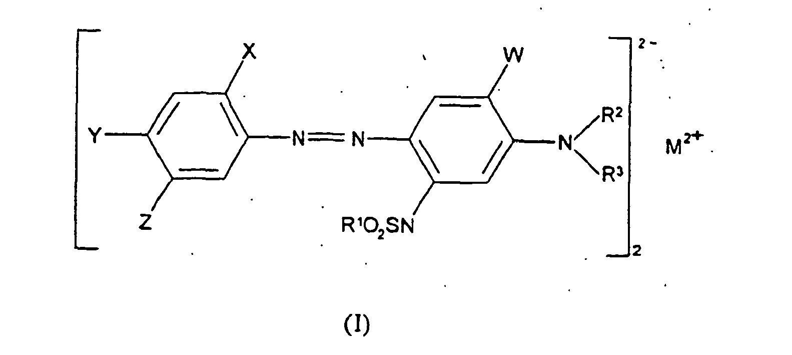 wobei
R¹ C₁₋₆-Alkyl, Phenyl oder C₁₋₆-Alkyl-substituiertes Phenyl darstellt;
R² und R³ unabhängig voneinander identisches oder unterschiedliches C₁₋₆-Alkyl, optional substituiert mit C₁₋₆-Alkyl, darstellt;
W Wasserstoff, C₁₋₆-Alkyl, C₁₋₆-Alkoxy oder Halogen darstellt;
X Wasserstoff, C₁₋₆-Alkyl, C₁₋₆-Alkoxy oder Halogen darstellt;
Y Wasserstoff oder ein Aminoderivat darstellt;
Z Wasserstoff, C₁₋₆-Alkyl, C₁₋₆-Alkoxy oder Halogen darstellt;
M ein zweiwertiges Metall darstellt, das ausgewählt ist aus Gruppe IB, IIB oder VIIIB im Periodensystem.

6. Optische Speichermedien mit hoher Speicherdichte nach Anspruch 5, wobei R¹ ausgewählt ist aus der Gruppe bestehend aus Methyl, Phenyl oder Methylphenyl; R² und R³ unabhängig voneinander identisch oder unterschiedlich Methyl oder Ethyl darstellen.

7. Optische Speichermedien mit hoher Speicherdichte nach Anspruch 5, wobei W Wasserstoff, Methyl, Methoxy oder Chlor darstellt; X Wasserstoff, Methyl oder Methoxy darstellt; Y Wasserstoff oder Benzamido (NBz) darstellt; Z Wasserstoff, Methyl oder Methoxy darstellt.

8. Optische Speichermedien mit hoher Speicherdichte nach Anspruch 5, wobei das zweiwertige Metall M Ni, Cu oder Zn darstellt.

9. Verfahren für die Herstellung von optischen Speichermedien mit hoher Speicherdichte nach einem der Ansprüche 5 bis 8, welches die Schritte umfaßt:
1) Herstellen eines runden Polymersubstrats mit einem äußeren Durchmesser von 120 mm, einem inneren Durchmesser von 15 mm, einer Dicke von 0,6 mm durch eine Injektionsformungsmaschine und Bilden kontinuierlicher spiraler Rillen mit einer Tiefe von 150 bis 180 nm, einer Halbwertsbreite von 340 bis 380 nm, einer Bodenbreite von 260 bis 280 nm darauf durch Drucken mit einem Stanzer,
2) Auflösen der Materialien nach einem der Ansprüche 1 bis 4 in Lösungsmitteln, um eine 1,5%ige Lösung von Azometallchelatverbindungen zu bilden, gefolgt von einer Spinbeschichtung des Substrats mit der Farbstofflösung,
3) Erhalten einer Absorption bei der maximalen Absorptionswellenlänge in einem Bereich von 0,7 bis 0,8 nach Beschichten der Speicherschicht mit der Farbstofflösung, bestimmt durch UV-Vis-Spektroskopie,
4) Backen der Beschichtung bei einer Temperatur von 60 bis 80°C für 10 bis 20 Minuten, um Lösungsmittel abzudampfen,
5) Bilden eines etwa 120 nm Goldfilms als eine Reflektionsschicht auf der Speicherschicht enthaltend einen Farbstoff durch eine Sputtermaschine, dann Spinbeschichten des Substrats mit einem Lack und Härten desselben, um eine Schutzschicht zu bilden, und
6) Beschichten der Schutzschicht mit einer Klebstoffschicht durch Siebdruck oder Spinbeschichtung, auf der ein transparentes Polymersubstrat mit einer Dicke von 0,6 mm und einem äußeren Durchmesser von 120 mm angefügt wird, um ein speicherfähiges optisches Speichermedium mit einer Dicke von 1,2 bis 1,25 mm und einem äußeren Durchmesser von 120 mm zu erhalten.

10. Verfahren nach Anspruch 9, wobei das Substrat Polycarbonat ist.

## Revendications

1. Matériaux pour supports d'enregistrement optique de haute densité représentés par des composants métallo-chélatiques azo de la formule (I) : 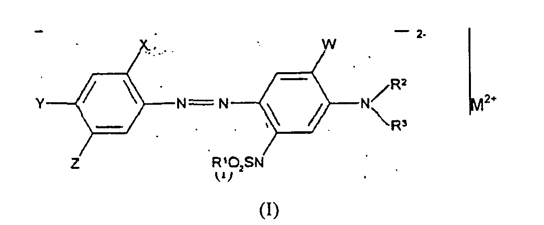 dans lesquels
R¹ représente alkyle C₁₋₆, phényle ou phényle substitué par un alkyle C₁₋₆;
R² et R³, indépendamment l'un de l'autre, représentent un alkyle C₁₋₆ identique ou différent, optionnellement substitué par un alkyle C₁₋₆;
W représente hydrogène, alkyle C₁₋₆, alkoxy C₁₋₆ ou halogène ;
X représente hydrogène, alkyle C₁₋₆, alkoxy C₁₋₆ ou halogène ;
Y représente hydrogène ou un dérivé amino ;
Z représente hydrogène, alkyle C₁₋₆, alkoxy C₁₋₆ ou halogène ;
M représente un métal divalent sélectionné à partir du Groupe IB, IIB ou VIIIB dans le tableau périodique.

2. Matériaux selon la revendication 1, où R¹ est sélectionné à partir du méthyle, du phényle ou du méthylphényle ; R² et R³, indépendamment l'un de l'autre, représentent un méthyle ou un éthyle identique ou différent.

3. Matériaux selon la revendication 1, où W représente hydrogène, méthyle, méthoxy ou chloro ; X représente hydrogène, méthyle ou méthoxy ; Y représente hydrogène ou benzamido (NBz) ; Z représente hydrogène, méthyle ou méthoxy.

4. Matériaux selon la revendication 1, où le métal divalent M représente Ni, Cu ou Zn.

5. Support d'enregistrement optique enregistrable de haute densité comprenant une couche d'enregistrement et une couche réfléchissante formée sur un substrat [*in order, it seems here that the sentence is not complete],* **caractérisé en ce que** la couche réfléchissante est revêtue d'un composé métallo-chélatique azo de la formule (I) : 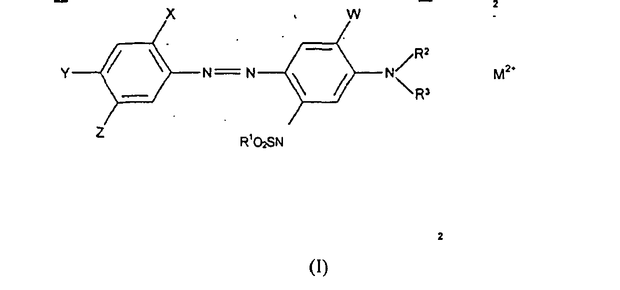 dans lequel
R¹ représente alkyle C₁₋₆, phényle ou phényle substitué par un alkyle C₁₋₆;
R² et R³, indépendamment l'un de l'autre, représentent un alkyle C₁₋₆ identique ou différent, optionnellement substitué par un alkyle C₁₋₆ ;
W représente hydrogène, alkyle C₁₋₆, alkoxy C₁₋₆ ou halogène ;
X représente hydrogène, alkyle C₁₋₆, alkoxy C₁₋₆ ou halogène;
Y représente hydrogène ou un dérivé amino ;
Z représente hydrogène, alkyle C₁₋₆, alkoxy C₁₋₆ ou halogène ;
M représente un métal divalent sélectionné à partir du Groupe IB, IIB ou VIIIB dans le tableau périodique.

6. Support d'enregistrement optique de haute densité selon la revendication 5, où R¹ est sélectionné à partir du groupe méthyle, phényle ou méthylphényle ; R² et R³, indépendamment l'un de l'autre, représentent un méthyle ou éthyle identique ou différent.

7. Support d'enregistrement optique de haute densité selon la revendication 5, où W représente hydrogène, méthyle, méthoxy ou chloro ; X représente hydrogène, méthyle ou méthoxy ; Y représente hydrogène ou benzamido (NBz) ; Z représente hydrogène, méthyle ou méthoxy.

8. Support d'enregistrement optique de haute densité selon la revendication 5, où le métal divalent M représente Ni, Cu ou Zn.

9. Un processus pour la préparation d'un support d'enregistrement optique de haute densité selon l'une quelconque des revendications 5 à 8, comprenant les étapes de :
1) préparation d'un substrat de polymère rond ayant un diamètre extérieur de 120 mm, un diamètre intérieur de 15 mm, une épaisseur de 0,6 mm par une machine de moulage par injection et par le formage sur celui-ci de sillons spiralés ayant une profondeur de 150 à 180 nm, une largeur mi-hauteur de 340 à 380 nm, une largeur à fond de 260 à 280 nm en imprimant avec une matrice,
2) dissolution des matériaux selon l'une quelconque des revendications 1 à 4 en des solvants pour former une solution à 1,5 % de composés métallo-chélatiques azo, suivie d'un dépôt à la tournette du substrat avec la solution de colorant,
3) obtention d'une absorption à la longueur d'onde d'absorption maximale dans la plage de
• 0,7 à 0,8 après le revêtement de la couche d'enregistrement avec la solution de colorant, déterminée par la spectroscopie UV-visible,
4) cuisson du revêtement à une température de 60 à 80°C pendant 10 à 20 minutes pour faire évaporer les solvants,
5) formation d'une pellicule d'or d'environ 120 nm à titre de couche réfléchissante sur la couche d'enregistrement contenant un colorant déposé par une machine de projection en gouttes, puis dépôt à la tournette dudit substrat avec une laque et cuisson de celui-ci pour former une couche protectrice, et
6) revêtement de la couche protectrice d'une couche d'adhésif par sérigraphie ou dépôt à la tournette, sur laquelle un substrat de polymère transparent ayant une épaisseur de 0.6 mm et un diamètre externe de 120 mm est attaché, de manière à obtenir un support d'enregistrement optique enregistrable d'une épaisseur de 1,2 à 1,25 mm et d'un diamètre externe de 120 mm.

10. Processus selon la revendication 9, où le substrat est du polycarbonate.
